# EUROPEAN PATENT APPLICATION

(11) **EP 4 616 728 A1**
(43) Date of publication of application: **17.09.2025**
(21) Application number: 22965198.9
(22) Date of filing: 11.11.2022
(51) Int. Cl.: A24D 1/20, A24D 3/17, A24F 40/46

(54) **FLAVOR-GENERATING ARTICLE**

(71) Applicant: Japan Tobacco Inc., Tokyo 105-6927 (JP)
(72) Inventor: MATSUMOTO, Hirofumi, Tokyo 130-8603 (JP); YAMADA, Manabu, Tokyo 130-8603 (JP)
(74) Representative: Hoffmann Eitle
(86) International application number: PCT/JP2022/042038
(87) International publication number: WO 2024/100874

(57) **Abstract**

Provided is a flavor-generating article that is heated by microwaves to generate a flavor. The flavor-generating article has a flavor source and a filter having a relative permittivity of 10 or less.

## Description

### TECHNICAL FIELD

The present invention relates to a flavor-generating article.

### BACKGROUND ART

Flavor-generating articles for inhaling flavors, etc. without burning of materials are conventionally known (e.g., PTL 1 and PTL 2). Known flavor-generating articles such as these include those which have a flavor source comprising tobacco containing a volatile component, and which are heated by microwaves (see PTL 3).

### CITATION LIST

### PATENT LITERATURE

PTL 1 WO 2020/002165 A1
PTL 2 WO 2020/007879 A1
PTL 3 CN 110141002 A

### SUMMARY OF INVENTION

### TECHNICAL PROBLEM

In the device disclosed in PTL 3, a conductor for generating microwaves is inserted into the flavor source of the flavor-generating article, and the flavor source is heated by irradiating the flavor source with microwaves from the inside. In a device such as this, the microwaves need to be appropriately transmitted to the flavor source of the flavor-generating article in order to heat the flavor source efficiently.

One objective of the present invention lies in heating a flavor source efficiently by means of microwaves.

### SOLUTION TO PROBLEM

A first aspect provides a flavor-generating article which is heated by means of microwaves to generate a flavor. The flavor-generating article has a flavor source and a filter having a relative permittivity of 10 or less.

According to the first aspect, it is possible to suppress absorption of the microwaves from a microwave generating antenna by the filter, enabling the flavor source to be heated efficiently. It should be noted that the "filter" as referred to in the specification of this case is not limited to a member for filtering some kind of material, and includes any air-permeable member. Specifically, for example, the "filter" includes air-permeable members having one or more communicating holes, or one or more grooves or cutouts, such as a hollow filter which will be described later. Furthermore, the material forming the "filter" may itself be an air-permeable porous material, or may be a material which is itself air-impermeable (e.g., glass, ceramic, cellulose molding), etc.

The essential point of a second aspect, which is in accordance with the first aspect, is that the filter comprises a mouthpiece filter.

According to the second aspect, it is possible to suppress absorption of the microwaves from the microwave generating antenna by the mouthpiece filter, enabling the flavor source to be heated efficiently.

The essential point of a third aspect, which is in accordance with the first or second aspect, is that the filter comprises a dropping-prevention filter which is disposed upstream of the flavor source and prevents the flavor source from dropping out from the flavor-generating article.

According to the third aspect, it is possible to suppress absorption of the microwaves from the microwave generating antenna by the dropping-prevention filter, enabling the flavor source to be heated efficiently.

The essential point of a fourth aspect, which is in accordance with the third aspect, is that the dropping-prevention filter has a longitudinally-extending through-hole enabling insertion of a microwave generating antenna.

According to the fourth aspect, resistance to insertion of the microwave generating antenna caused by the dropping-prevention filter is reduced, so the microwave generating antenna can be smoothly inserted into the flavor source.

The essential point of a fifth aspect, which is in accordance with the third or fourth aspect, is that the flavor-generating article comprises a sheet member surrounding the dropping-prevention filter, the dropping-prevention filter has a longitudinally-extending groove on an outer circumferential surface thereof, and a gap is formed between the sheet member and the dropping-prevention filter.

According to the fifth aspect, external air can flow into the flavor source through the gap, which therefore enables the flavor generated by the flavor source to be delivered more efficiently to a user.

The essential point of a sixth aspect, which is in accordance with any of the third to fifth aspects, is that the dropping-prevention filter has an air flow hole in communication with the outer circumferential surface thereof.

According to the sixth aspect, external air can flow into the dropping-prevention filter through the air flow hole, which therefore enables the flavor generated by the flavor source to be delivered more efficiently to the user.

The essential point of a seventh aspect, which is in accordance with any of the first to sixth aspects, is that the filter comprises a hollow filter positioned on a mouthpiece side of the flavor source.

According to the seventh aspect, it is possible to suppress absorption of the microwaves from the microwave generating antenna by the hollow filter, enabling the flavor source to be heated efficiently.

The essential point of an eighth aspect, which is in accordance with any of the first to seventh aspects, is that the filter is free from triacetin.

Triacetin readily absorbs microwaves. According to the eighth aspect, it is possible to suppress absorption of the microwaves from the microwave generating antenna by making the mouthpiece filter free from triacetin.

The essential point of an ninth aspect, which is in accordance with any of the first to eighth aspects, is that the filter comprises at least one selected from the group consisting of charcoal, a metal mesh, and a metal ring.

According to the ninth aspect, it is possible to suppress leakage of microwaves from the microwave generating antenna. Specifically, a metal mesh or a metal ring is capable of reflecting microwaves, and charcoal is capable of absorbing microwaves.

The essential point of a tenth aspect, which is in accordance with any of the first to ninth aspects, is that the flavor-generating article comprises a sheet member surrounding the outer circumference of the filter and the flavor source.

According to the tenth aspect, the flavor source can be integrally bonded to the filter, e.g., to the mouthpiece filter, the hollow filter, and the dropping-prevention filter.

The essential point of an eleventh aspect, which is in accordance with the tenth aspect, is that the sheet member is a metal foil or metal-laminated paper.

According to the eleventh aspect, microwaves can be reflected toward the flavor source by a metal, so the microwaves can be efficiently applied to the flavor source.

The essential point of a twelfth aspect, which is in accordance with any of the first to eleventh aspects, is that the air flow resistance of the flavor-generating article is 40 mmH₂O-120 mmH₂O.

According to the twelfth aspect, it is possible to provide the user with a comfortable feeling of inhalation. Furthermore, the air flow resistance is not excessively high, so it is possible to suppress undesired aerosol filtration.

### BRIEF DESCRIPTION OF DRAWINGS

Fig. 1 is a schematic side view in cross section of a flavor inhalation system comprising a flavor-generating article according to the embodiment.
Fig. 2 is a schematic side view in cross section of the flavor-generating article.
Fig. 3 is a cross-sectional enlargement of fig. 1 to illustrate dimensions of a flavor source and a positional relationship of a microwave generating antenna and the flavor source.
Fig. 4 is a schematic diagram depicting an electromagnetic field intensity distribution of microwaves generated by the microwave generating antenna.
Fig. 5 is a schematic cross-sectional enlargement of an example of a flavor-generating article having a gap between the flavor source and a sheet member.
Fig. 6 is a schematic cross-sectional enlargement of another example of a flavor-generating article having a gap between the flavor source and the sheet member.

### DESCRIPTION OF EMBODIMENTS

Embodiments of the present invention will be described below with reference to the drawings. In the drawings described below, identical or corresponding components are assigned the same reference numbers and duplicate descriptions will not be given. It should be noted that the "longitudinal direction" in the present specification means the longitudinal direction of the flavor-generating article, in other words, the direction of insertion of the flavor-generating article into the flavor inhaler. Furthermore, "short-side direction" or "radial direction" in the present specification means a direction orthogonal to the longitudinal direction.

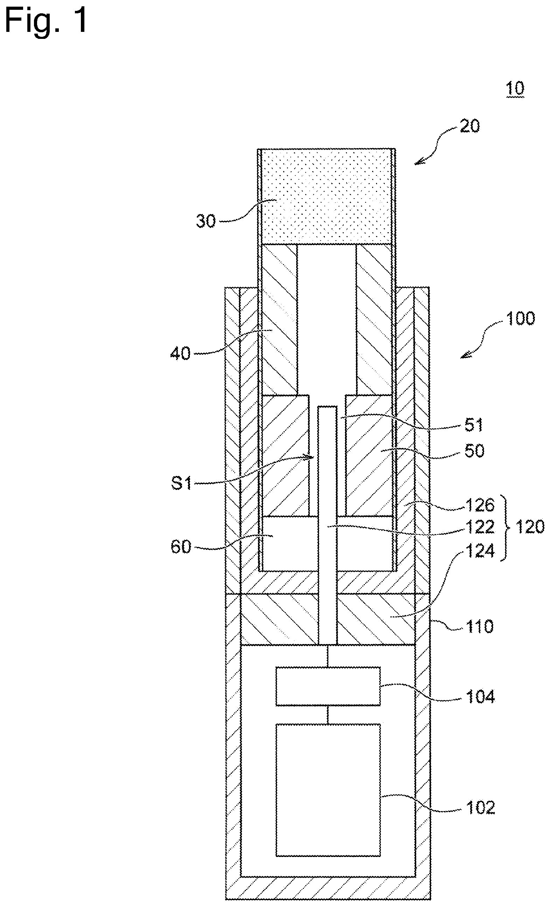

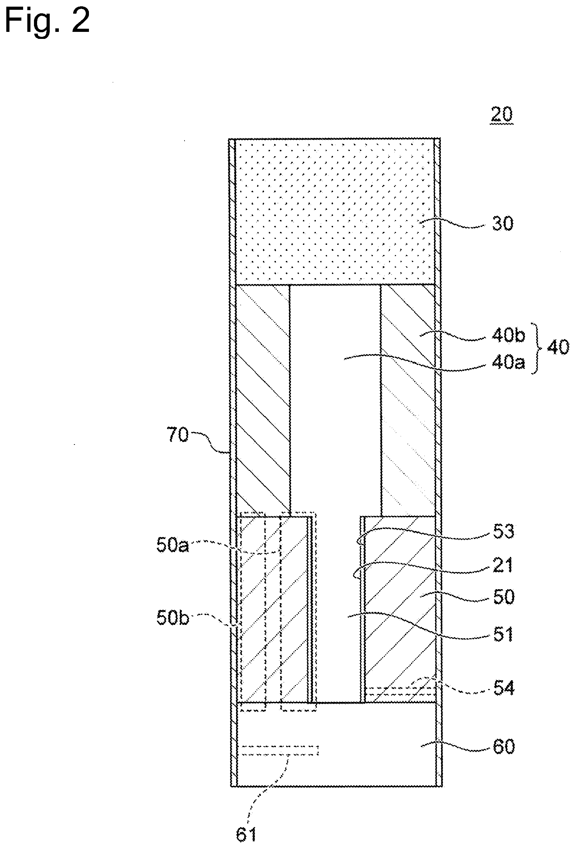

Fig. 1 is a schematic side view in cross section of a flavor inhalation system comprising a flavor-generating article according to the embodiment. Fig. 2 is a schematic side view in cross section of the flavor-generating article. As shown in fig. 1, a flavor inhalation system 10 according to this embodiment comprises a flavor-generating article 20 and a flavor inhaler 100. The flavor inhaler 100 is preferably a portable device or a handheld device. As shown in fig. 1, the flavor inhaler 100 comprises: a battery 102, a PCB (printed circuit board) 104, a housing 110, and a heating unit 120. The flavor-generating article 20 comprises a flavor source 50 which is heated by means of the flavor inhaler 100. The detailed configuration of the flavor-generating article 20 will be described later.

The flavor inhaler 100 is configured to atomize a flavor or aerosol source contained in the flavor source 50 of the flavor-generating article 20. The flavor source 50 constitutes part of a flavor-generating article 20 having a columnar shape extending along a longitudinal direction, for example. The flavor-generating article 20 may be a tobacco stick in which the flavor source 50 contains tobacco, for example. The battery 102 stores electrical power used by the flavor inhaler 100. The battery 102 is a lithium ion battery, for example. The battery 102 may be rechargeable by means of an external power source.

The PCB 104 is configured by a CPU and a memory, etc. and controls operation of the flavor inhaler 100. For example, the PCB 104 starts heating of the flavor source 50 in response to a user operation on an input device such as a push-button or slide switch (not depicted), and terminates heating of the flavor source 50 once a given time has elapsed. When the number of puffing actions by the user has passed a fixed value, the PCB 104 may terminate heating of the flavor source 50 even if the given time has not yet elapsed from the start of heating of the flavor source 50. Puffing actions are detected by means of a sensor which is not depicted, for example.

Alternatively, the PCB 104 may start heating of the flavor source 50 in response to the start of a puffing action, and may terminate heating of the flavor source 50 in response to the end of the puffing action. When a given time has elapsed from the start of the puffing action, the PCB 104 may terminate heating of the flavor source 50 even if the puffing action has not yet finished. In this embodiment, the PCB 104 is disposed between the battery 102 and the heating unit 120.

In the example depicted, the flavor inhaler 100 is configured to receive a stick-shaped flavor-generating article 20. Furthermore, as shown in the drawing, the battery 102, PCB 104 and heating unit 120 may be aligned in a direction of insertion of the flavor-generating article 20 into the flavor inhaler 100. The housing 110 is an enclosure for accommodating the battery 102, the PCB 104 and the heating unit 120.

The heating unit 120 comprises: a microwave generating antenna 122, an antenna mount 124, and a chamber 126. The microwave generating antenna 122 has a shape allowing insertion into the flavor source 50, and is configured to emit microwaves from inside the flavor source 50. The chamber 126 is configured to accommodate at least the flavor source 50 of the flavor-generating article 20. The microwave generating antenna 122 is disposed overlapping the flavor source 50 in the longitudinal direction in a state in which the flavor-generating article 20 is positioned at a desired location inside the chamber 126. The microwave generating antenna 122 is electrically connected to the battery 102 so as to be supplied with power from the battery 102. The antenna mount 124 is a member for attaching the microwave generating antenna 122 to the housing 110. The antenna mount 124 may be formed by a material having a relative permittivity of 10 or less that substantially does not absorb microwaves.

The flavor inhaler 100 may have a thermocouple or a radiation thermometer configured to detect the temperature at any location in the flavor inhaler 100, such as inside the chamber 126, for example, in order to control power for the microwaves. The PCB 104 may control the power supplied to the microwave generating antenna 122 on the basis of detection data from the thermocouple or the radiation thermometer. Alternatively, the PCB 104 may control the power supplied to the microwave generating antenna 122 by detecting the permittivity or impedance, which varies as a result of heating, of any member of the flavor inhaler 100, such as the chamber 126, for example.

The flavor-generating article 20 of this embodiment is heated by means of microwaves to generate a flavor. Parts of the flavor-generating article 20 other than the flavor source 50 therefore preferably do not absorb microwaves. The flavor-generating article 20 of this embodiment therefore preferably comprises the flavor source 50 and a filter having a relative permittivity of 10 or less. This makes it possible to suppress absorption of the microwaves from the microwave generating antenna 122 by the filter, enabling the flavor source 50 to be heated efficiently. Here, the filter having a relative permittivity of 10 or less includes at least one selected from the group consisting of a mouthpiece filter 30, a hollow filter 40, and a dropping-prevention filter 60, which are illustrated in fig. 2.

Specifically, as shown in fig. 2, the flavor-generating article 20 of this embodiment may comprise: the mouthpiece filter 30, the hollow filter 40, the flavor source 50, and the dropping-prevention filter 60. The dropping-prevention filter 60, flavor source 50, hollow filter 40, and filter 30 are arranged adjacently in that order from a tip end side in a direction of insertion of the flavor-generating article 20 into the chamber 126 of the flavor inhalation system 10 shown in fig. 1. It should be noted that as long as the flavor-generating article 20 comprises at least the flavor source 50, the other components may be omitted, as appropriate. The air flow resistance of the flavor-generating article 20 is preferably 40 mmH₂O-120 mmH₂O. This enables the user to be provided with a comfortable feeling of inhalation. Furthermore, the air flow resistance is not excessively high, so it is possible to suppress undesired aerosol filtration.

The flavor source 50 may be a non-tobacco sheet or a tobacco sheet such as a nonwoven fabric, or may be a tobacco molding, for example. If the flavor source 50 is a tobacco sheet, then a sheet of leaf tobacco formed by papermaking, a cast sheet of tobacco leaf, or a rolled sheet of tobacco leaf, etc. may specifically be used as the flavor source 50. The flavor source 50 may be block-shaped non-tobacco or tobacco comprising at least a first hole 51 which will be described later. The flavor source 50 may further comprise an aerosol source. There is no particular limitation as to the type of aerosol source, and extracts from various types of natural products and/or components thereof may be selected depending on the purpose of use. The aerosol source is preferably a polyhydric alcohol, and may be, for example, glycerol, propylene glycol, triacetin, 1,3-butanediol, and mixtures thereof. The tobacco flavor or aerosol source contained in the flavor source 50 comprises moisture and can therefore be heated by the microwaves irradiated from the microwave generating antenna 122. The packing amount of the flavor source 50 may be 100 mg-350 mg, and may preferably be 120 mg-250 mg, for example.

The surface area of the flavor source 50 (the surface area of the flavor source 50 contributing to aerosol generation) is preferably 150 mm²-4000 mm². The flavor source 50 may be formed from strands of tobacco leaf. In this case, the width of the strands of tobacco leaf is preferably 1 mm or less, and more preferably 0.5 mm or less.

The flavor source 50 may support a flavoring material. There is no particular limitation as to the type of flavoring material, and, from the point of view of imparting a favorable flavoring sensation, it is possible to select at least one from among: acetanisole, acetophenone, acetylpyrazine, 2-acetylthiazole, alfalfa extract, amyl alcohol, amyl butyrate, trans-anethole, star anise oil, apple juice, Peru Balsam oil, beeswax absolute, benzaldehyde, benzoin resinoid, benzyl alcohol, benzyl benzoate, benzyl phenylacetate, benzyl propionate, 2,3-butanedione, 2-butanol, butyl butyrate, butyric acid, caramel, cardamom oil, carob absolute, β-carotene, carrot juice, L-carvone, β-caryophyllene, cassia bark oil, cedar wood oil, celery seed oil, chamomile oil, cinnamaldehyde, cinnamic acid, cinnamyl alcohol, cinnamyl cinnamate, citronella oil, DL-citronellol, clary sage extract, cocoa, coffee, cognac oil, coriander oil, cuminaldehyde, davana oil, δ-decalactone, γ-decalactone, decanoic acid, dill herb oil, 3,4-dimethyl-1,2-cyclopentanedione, 4,5-dimethyl-3-hydroxy-2,5-dihydrofuran-2-one, 3,7-dimethyl-6-octenoic acid, 2,3-dimethylpyrazine, 2,5-dimethylpyrazine, 2,6-dimethylpyrazine, 2-ethyl methylbutyrate, ethyl acetate, ethyl butyrate, ethyl hexanoate, ethyl isovalerate, ethyl lactate, ethyl laurate, ethyl levulinate, ethyl maltol, ethyl octanoate, ethyl oleate, ethyl palmitate, ethyl phenylacetate, ethyl propionate, ethyl stearate, ethyl valerate, ethyl vanillin, ethyl vanillin glucoside, 2-ethyl-3,(5 or 6)-dimethylpyrazine, 5-ethyl-3-hydroxy-4-methyl-2(5H)-furanone, 2-ethyl-3-methylpyrazine, eucalyptol, fenugreek absolute, genet absolute, gentian root infusion, geraniol, geranyl acetate, grape juice, guaiacol, guava extract, γ-heptalactone, γ-hexalactone, hexanoic acid, cis-3-hexene-1-ol, hexyl acetate, hexyl alcohol, hexyl phenylacetate, honey, 4-hydroxy-3-pentenoic acid lactone, 4-hydroxy-4-(3-hydroxy-1-butenyl)-3,5,5-trimethyl-2-cyclohexen-1-one, 4-(para-hydroxyphenyl)-2-butanone, 4-hydroxyundecanoic acid sodium, immortelle absolute, β-ionone, isoamyl acetate, isoamyl butyrate, isoamyl phenylacetate, isobutyl acetate, isobutyl phenylacetate, jasmine absolute, kola nut tincture, labdanum oil, lemon terpeneless oil, glycyrrhiza extract, linalool, linalyl acetate, lovage root oil, maltol, maple syrup, menthol, menthone, acetic acid L-menthyl, paramethoxybenzaldehyde, methyl-2-pyrrolyl ketone, methyl anthranilate, methyl phenylacetate, methyl salicylate, 4'-methylacetophenone, methylcyclopentenolone, 3-methylvaleric acid, mimosa absolute, molasses, myristic acid, nerol, nerolidol, γ-nonalactone, nutmeg oil, δ-octalactone, octanal, octanoic acid, orange flower oil, orange oil, orris root oil, palmitic acid, ω-pentadecalactone, peppermint oil, petitgrain Paraguay oil, phenethyl alcohol, phenethyl phenylacetate, phenylacetic acid, piperonal, plum extract, propenyl guaethol, propyl acetate, 3-propylidene phthalide, prune juice, pyruvic acid, raisin extract, rose oil, rum, sage oil, sandalwood oil, spearmint oil, styrax absolute, marigold oil, tea distillate, α-terpineol, terpinyl acetate, 5,6,7,8-tetrahydroquinoxaline, 1,5,5,9-tetramethyl-13-oxacyclo(8.3.0.0(4.9))tridecane, 2,3,5,6-tetramethylpyrazine, thyme oil, tomato extract, 2-tridecanone, triethyl citrate, 4-(2,6,6-trimethyl-1-cyclohexenyl)-2-buten-4-one, 2,6,6-trimethyl-2-cyclohexen-1,4-dione, 4-(2,6,6-trimethyl-1,3-cyclohexadienyl)-2-buten-4-one, 2,3,5-trimethylpyrazine, γ-undecalactone, γ-valerolactone, vanilla extract, vanillin, veratraldehyde, violet leaf absolute, N-ethyl-p-menthane-3-carboamide (WS-3), ethyl-2-(p-menthane-3-carboxamide) acetate (WS-5), sugar (sucrose, fructose, etc.), cocoa powder, carob powder, coriander powder, licorice powder, orange peel powder, rose pip powder, chamomile flower powder, lemon verbena powder, peppermint powder, leaf powder, spearmint powder, tea powder, natural plant flavorings (e.g., jasmine oil, lemon oil, vetivar oil, lovage oil), and esters.

As shown in fig. 1, when the microwave generating antenna 122 is inserted into the flavor source 50, there is a possibility that components of the heated flavor source 50 will adhere to the microwave generating antenna 122. In this embodiment, the flavor source 50 therefore comprises the first hole 51 which enables insertion of the microwave generating antenna 122, as shown in fig. 2. As a result, when the microwave generating antenna 122 has been inserted into the first hole 51, the flavor source 50 is in less close contact with the microwave generating antenna 122 than when the flavor source 50 does not have the first hole 51. It is therefore possible to reduce the likelihood of components of the heated flavor source 50 adhering to the microwave generating antenna 122.

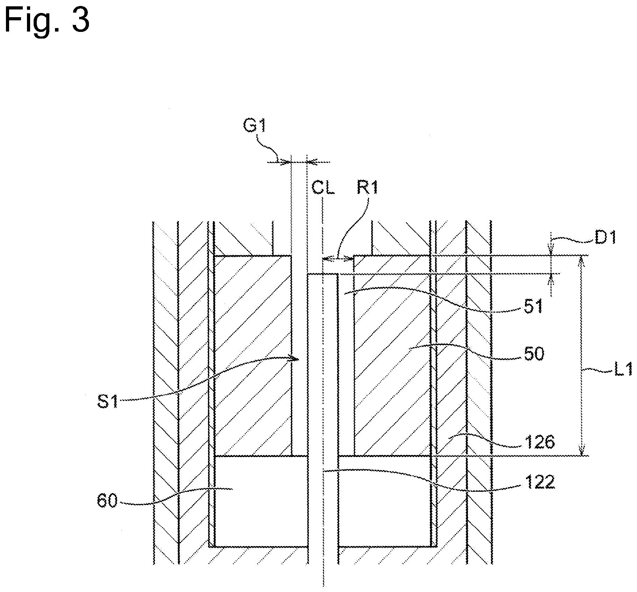

Fig. 3 is a cross-sectional enlargement of fig. 1 to illustrate dimensions of the flavor source 50 and a positional relationship of the microwave generating antenna 122 and the flavor source 50. Fig. 3 shows a state in which the flavor-generating article 20 is positioned at a desired location inside the chamber 126. It should be noted that, in the present specification, the phrase "a state in which the flavor-generating article 20 is positioned at a desired location inside the chamber 126 (or the flavor inhaler 100)" refers to a state in which the flavor-generating article 20 has been correctly positioned at the intended location inside the chamber 126 (or the flavor inhaler 100) in order to cause aerosol generation from the flavor-generating article 20. As shown in fig. 1-3, the first hole 51 may extend over the entire length of the flavor source 50 in the longitudinal direction. That is to say, the first hole 51 may be a through-hole, as shown in fig. 1-3. This is not limiting, and the first hole 51 may equally extend partway through the flavor source 50 in the longitudinal direction. That is to say, the first hole 51 may be a blind hole (or recess) extending from the dropping-prevention filter 60 side of the flavor source 50 with the bottom on the hollow filter 40 side.

The radius R1 of the first hole 51 shown in fig. 3 is preferably equal to or greater than the radius of the microwave generating antenna 122. When the microwave generating antenna 122 has been inserted into the first hole 51 as shown in fig. 1, pressing of the flavor source 50 against the microwave generating antenna 122 is suppressed because the radius of the first hole 51 is equal to or greater than the radius of the microwave generating antenna 122. Specifically, the flavor source 50 is separated from the microwave generating antenna 122, or else is not strongly pressed against the microwave generating antenna 122 even if the flavor source 50 is in contact with the microwave generating antenna 122. It is therefore possible to further reduce the likelihood of components of the heated flavor source 50 adhering to the microwave generating antenna 122.

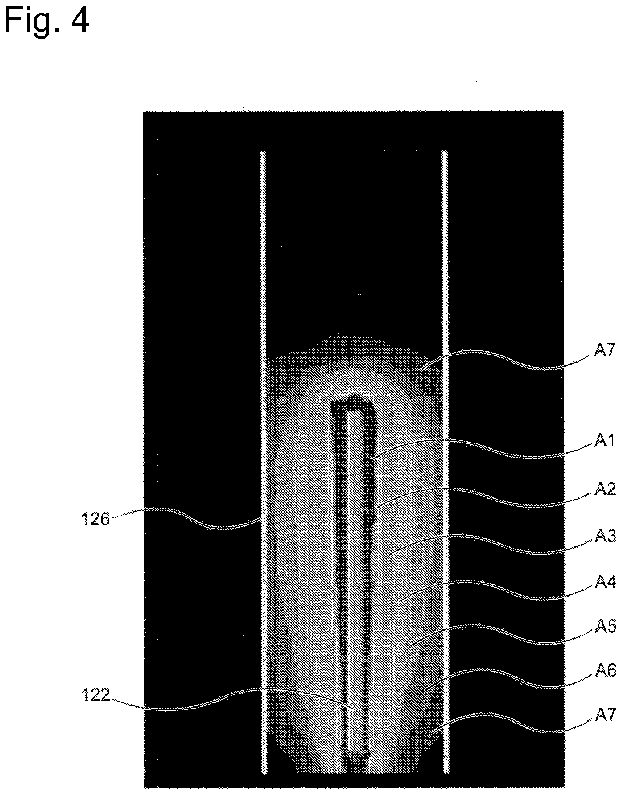

Fig. 4 is a schematic diagram depicting an electromagnetic field intensity distribution of microwaves generated by the microwave generating antenna 122. The electromagnetic field intensity distribution here shows the results of simulating the electromagnetic field intensity when a microwave generating antenna 122 having a diameter of 1.0 mm and a length of 20 mm is placed in the center of a copper pipe having an inner diameter of approximately 10 mm and a thickness of approximately 0.5 mm. The inside of the copper pipe is filled with air in order to simplify the simulation. Regions A1-A7 are apparent in the electromagnetic field intensity distribution of microwaves generated by the microwave generating antenna 122 as shown in fig. 4, with the region A1 having the highest electromagnetic field intensity, and the electromagnetic field intensity diminishing in the order of the region A2, the region A3, the region A4, the region A5, the region A6, and the region A7. As shown in fig. 4, the intensity of the electromagnetic field of the microwave generating antenna 122 is judged to be higher closer to the microwave generating antenna 122. A space S1 (i.e., a gap G1) between the microwave generating antenna 122 and the flavor source 50 therefore preferably has a small radial size. Specifically, for example, the radius R1 of the first hole 51 shown in fig. 3 here is preferably 3 mm or less (i.e., the space S1 is preferably 2.5 mm or less), more preferably 2 mm or less (i.e., the gap G1 is preferably 1.5 mm or less), and even more preferably 1 mm or less (i.e., the gap G1 is preferably 0.5 mm or less).

As shown in fig. 4, the intensity of the electromagnetic field generated by the microwave generating antenna 122 is judged to be higher closer to a top portion of the antenna. The length L1 of the first hole 51 shown in fig. 3 is therefore preferably equal to or greater than half the length of the microwave generating antenna 122, and is more preferably equal to or greater than 3/4 of the length of the microwave generating antenna 122. In this case, at least half of the microwave generating antenna 122 from the top portion thereof can be inserted into the first hole 51, so microwaves can be efficiently transmitted to the flavor source 50 and sufficient flavor can be generated. If the length L1 of the first hole 51 is less than half of the length of the microwave generating antenna 122, then microwaves cannot be efficiently transmitted to the flavor source 50 because not all of the range within half of the length from the top portion of the microwave generating antenna 122 can be inserted.

Furthermore, as shown in fig. 4, the intensity of the electromagnetic field generated by the microwave generating antenna 122 is judged to be especially high at the top portion of the antenna, and the electromagnetic field intensity is also judged to be high in a predetermined range away from the top portion. That is to say, there is also a high electromagnetic field intensity in a predetermined range away from the top portion of the microwave generating antenna 122 in the longitudinal direction. Consequently, in a state in which the flavor-generating article 20 is positioned at a desired location in the flavor inhaler 100, as shown in fig. 3, the top portion of the microwave generating antenna 122 is preferably disposed overlapping the flavor source 50 in the longitudinal direction. In this case, the top portion having an especially high electromagnetic field intensity overlaps the flavor source 50 in the longitudinal direction, so microwaves can be efficiently transmitted to the flavor source 50 and sufficient flavor can be generated. To be more specific, a distance D1 between the top portion of the microwave generating antenna 122 shown in fig. 3 and one end of the flavor source 50 is preferably no greater than 10 mm, more preferably no greater than 5 mm, and even more preferably no greater than 2 mm. It should be noted that the distance D1 referred to here means the shorter distance out of the distances between the top portion of the antenna and either of the two ends in the length direction of the flavor source 50.

As shown in fig. 2, the flavor-generating article 20 preferably comprises a non-flavor source sheet 21 covering an inner surface 53 of the flavor source 50 defining the first hole 51. This makes it possible to prevent the microwave generating antenna 122 inserted into the first hole 51 from coming into direct contact with the flavor source 50, which therefore makes it possible to further reduce the likelihood of components of the heated flavor source 50 adhering to the microwave generating antenna 122. The non-flavor source sheet 21 is preferably not a material that will adhere to the microwave generating antenna 122 in the manner of the flavor source 50, etc. A surface of the non-flavor source sheet 21 may be covered by calcium carbonate, shellac or a glass-based coating, etc., for example, in order to suppress absorption of tobacco components or aerosol source that might be contained in the flavor source 50. The non-flavor source sheet 21 may be a material having a relative permittivity of 10 or less that substantially does not absorb microwaves, such as paper or a resin, for example. The non-flavor source sheet 21 preferably has one or more perforations penetrating between an inner surface and an outer surface thereof. As a result, a flavor generated from the flavor source 50 can flow into the first hole 51 through the perforation(s) in the non-flavor source sheet 21, which therefore makes it possible to suppress an increase in air flow resistance caused by the use of the non-flavor source sheet 21.

The non-flavor source sheet 21 may include an air-permeable sheet such as paper or a resin film having a plurality of perforations, for example. The air permeability of the non-flavor source sheet 21 is preferably greater than 0 CU, and more preferably 500 CU or greater. The air permeability here is measured in accordance with ISO 2965:1997.

When the flavor-generating article 20 comprises the non-flavor source sheet 21 as shown in fig. 2, the radial size of the gap between the microwave generating antenna 122 and the non-flavor source sheet 21 in a state in which the flavor-generating article 20 is positioned at the desired location inside the chamber 126 is preferably 2.5 mm or less, more preferably 1.5 mm or less, and even more preferably 0.5 mm or less. In the example shown in fig. 2, the length of the non-flavor source sheet 21 is the same as the length of the flavor source 50, but it may be greater than the length of the flavor source 50.

As shown in fig. 2, the non-flavor source sheet 21 may be a cylindrical sheet covering only the inner surface of the first hole 51 in the flavor source 50. Furthermore, the non-flavor source sheet 21 may be a cup-shaped sheet such as to close off the through-hole of the first hole 51. In addition, when the first hole 51 is a blind hole, the non-flavor source sheet 21 may be a cup-shaped sheet such as to cover the bottom of the blind hole.

Air that has flowed in from the dropping-prevention filter 60 of the flavor-generating article 20 passes through the inside of the flavor source 50 or the first hole 51 and reaches the user's mouth along with the flavor or aerosol. When the non-flavor source sheet 21 is a cup-shaped sheet, the air that has flowed in from the dropping-prevention filter 60 may pass between the flavor source 50 and a sheet member 70 which will be described later. Furthermore, when the flavor source 50 includes a plurality of flavor source sheets wound in a cylindrical shape as will be described later, the air that has flowed in from the dropping-prevention filter 60 may pass between the plurality of flavor source sheets.

As shown in fig. 2, the flavor source 50 may have a second hole 54 providing communication between the first hole 51 and an outer surface of the flavor source 50. In this case, external air can flow into the first hole 51 through the second hole 54 in the flavor source 50, which therefore enables the flavor generated by the flavor source 50 to be delivered more efficiently to the user. When the flavor-generating article 20 comprises the non-flavor source sheet 21 as shown in fig. 2, the second hole 54 and the perforation(s) formed in the non-flavor source sheet 21 are preferably in communication.

The flavor source 50 preferably comprises one or more flavor source sheets wound in a cylindrical shape. This makes it easier to produce the flavor source 50 having the first hole 51. When the flavor source 50 comprises one or more flavor source sheets, the flavor source sheet(s) is(are) preferably subjected to a surface area-increasing treatment. By this means, the flavor can be generated more efficiently because the surface area of the flavor source sheet can be increased as compared to when a surface area-increasing treatment is not performed. Here, the surface area-increasing treatment may include, for example, crimping, embossing, or punching, etc. When the flavor source sheet is crimped or embossed, gaps for the passage of air are formed by unevenness on the surface of the flavor source sheet, which therefore enables the flavor generated by the flavor source 50 to be efficiently delivered to the user. It should be noted that the flavor source 50 may be formed into a cylindrical shape by winding the flavor source sheet(s) in a spiral shape. The air permeability of the flavor source sheet 50 is preferably greater than 0 CU, and more preferably 500 CU or greater. The air permeability here is measured in accordance with ISO 2965:1997.

As shown in fig. 2, the flavor source 50 comprises a first part 50a and a second part 50b which is further from the first hole 51 than the first part 50a and lies on an outer circumferential side of the first part 50a. If the permittivity of the second part 50b located further away than the first part 50a when the microwave generating antenna 122 has been inserted into the first hole 51 is equal to that of the first part 50a, there is a possibility that the first part 50a will be heated preferentially, the heating temperature of the second part 50b will be lower than that of the first part 50a, and the second part 50b will not be adequately heated. The permittivity of the second part 50b is therefore preferably higher than the permittivity of the first part 50a. This makes it possible to suppress a situation in which the second part 50b is less readily heated than the first part 50a.

As shown in fig. 2, the flavor-generating article 20 preferably further comprises a sheet member 70 surrounding the outer circumference of the filter and the flavor source 50. This enables the flavor source 50 to be integrally bonded to the filter, e.g., to the mouthpiece filter 30, the hollow filter 40, and the dropping-prevention filter 60. The sheet member 70 may be formed from a non-tobacco material. Specifically, the sheet member 70 may be a material having a relative permittivity of 10 or less that substantially does not absorb microwaves, such as paper or a resin, for example. The sheet member 70 may also contain a substance such as charcoal which absorbs microwaves. Furthermore, the sheet member 70 may be a metal foil such as aluminum foil or metal-laminated paper such as aluminum-laminated paper. In this case, microwaves can be reflected toward the flavor source 50 by means of a metal such as aluminum, so the microwaves can be efficiently applied to the flavor source 50. The sheet member 70 may constitute the outermost casing of the flavor-generating article 20. In other words, at least part of the outer shape of the flavor-generating article 20 may be defined by the sheet member 70. Silver, copper, iron, Permalloy, nickel, stainless steel or an alloy comprising two or more of the above metals, etc. may be used in addition to aluminum as the material of the sheet member 70.

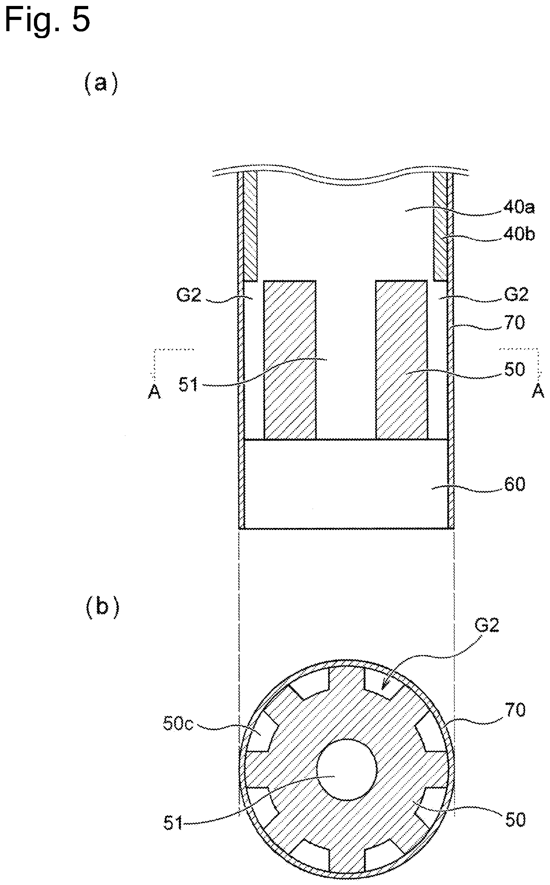

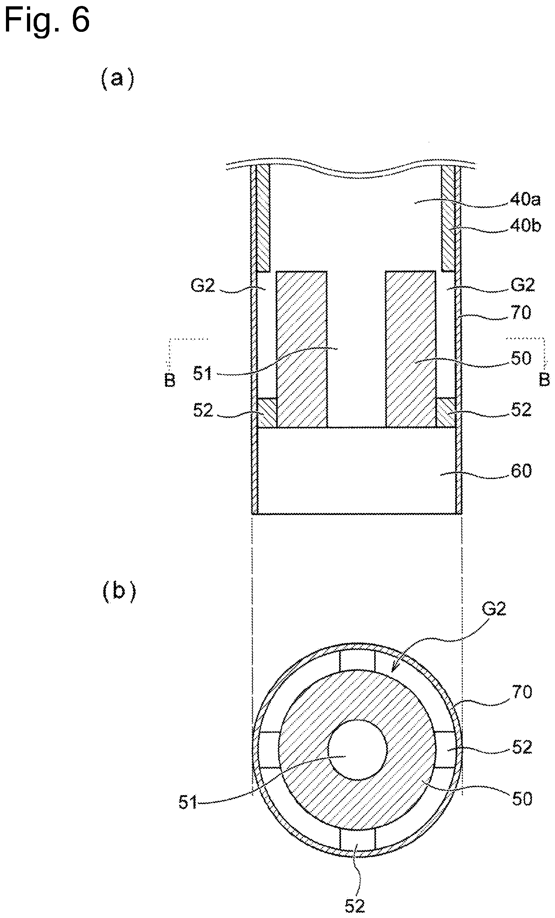

The sheet member 70 preferably has one or more perforations penetrating between an inner surface and an outer surface thereof. As a result, external air can flow into the flavor-generating article 20 through the perforation(s) in the sheet member 70, which therefore enables the flavor generated by the flavor source 50 to be delivered more efficiently to the user. The perforation(s) which the sheet member 70 may comprise may be provided at a position overlapping the mouthpiece filter 30, a packing layer 40b, the flavor source 50 or the dropping-prevention filter 60 in an axial direction, for example. When a radially-extending hole is formed in the mouthpiece filter 30, the perforation may be provided so as to communicate with that hole. It should be noted that a radially-extending hole need not be formed in the mouthpiece filter 30, in which case a perforation may be provided only in the sheet member 70. Furthermore, when a radially-extending through-hole is formed in the packing layer 40b, the perforation may be provided so as to communicate with that through-hole. It should be noted that a radially-extending through-hole need not be formed in the packing layer 40b, in which case a perforation may be provided only in the sheet member 70. Furthermore, the perforation may be provided so as to communicate with an upstream side, a downstream side, or the second hole 54 of the flavor source 50. It should be noted that the second hole 54 need not be formed in the flavor source 50, in which case a perforation may be provided only in the sheet member 70. Furthermore, the perforation may be provided so as to communicate with an air flow hole 61 in the dropping-prevention filter 60. It should be noted that the air flow hole 61 need not be formed in the dropping-prevention filter 60, in which case a perforation may be provided only in the sheet member 70. By forming a radially-extending through-hole in the packing layer 40b and the sheet member 70, for example, the flavor or aerosol generated by the flavor source 50 can be delivered toward the mouthpiece filter 30 by means of external air flowing in from the packing layer 40b, even if the dropping-prevention filter 60 has low air permeability or if external air is not readily taken in from an end face of the dropping-prevention filter 60 because of the dropping-prevention filter 60 being pressed against the chamber 126. Alternatively, by providing a flow path (gap) between the sheet member 70 and the flavor source 50 and providing a perforation communicating with this flow path in the sheet member 70, external air can be caused to flow into the flow path in order to deliver the flavor or aerosol generated by the flavor source 50 toward the mouthpiece filter 30. This form is especially advantageous when a gap G2 (see fig. 5 and 6) between the sheet member 70 and the flavor source 50 is provided, as will be described later.

The flavor source 50 may be in contact with the sheet member 70. The flavor source 50 is preferably bonded to the sheet member 70. Specifically, an outer circumferential surface of the flavor source 50 and an inner circumferential surface of the sheet member 70 are preferably bonded together by means of an adhesive or the like. This makes it possible to prevent the flavor source 50 from moving in relation to the sheet member 70, so even if the microwave generating antenna 122 comes into contact with the flavor source 50 after the microwave generating antenna 122 has been inserted into the first hole 51, it is possible to suppress misalignment of the flavor source 50. In this case, a cast sheet may be formed on the sheet member 70 by thinly casting a starting material comprising a binder and tobacco leaf constituting the flavor source 50 on the sheet member 70 and then drying the tobacco leaf. Alternatively, a rolled sheet may be formed on the sheet member 70 by applying pressure to thinly roll out a starting material comprising a binder and tobacco leaf constituting the flavor source 50 and then drying the tobacco leaf.

The flavor source 50 need not be bonded to the sheet member 70. Furthermore, the flavor source 50 need not be in contact with the sheet member 70. In these cases, for example, the flavor source 50 may be sandwiched between the hollow filter 40 and the dropping-prevention filter 60 so that the position thereof can be fixed.

The place where the flavor source 50 and the sheet member 70 is not bonded, i.e., a gap between the flavor source 50 and the sheet member 70, may form a flow path for air that has flowed in from the dropping-prevention filter 60, as described above. Fig. 5 is a schematic cross-sectional enlargement of an example of a flavor-generating article 20 having a gap between the flavor source 50 and the sheet member 70. Specifically, fig. 5 depicts fig. 5(a) showing a view in longitudinal section of the flavor-generating article 20, and fig. 5(b) showing a cross section of the flavor-generating article 20 along the arrows A-A shown in fig. 5(a). As shown in fig. 5(a), the flavor-generating article 20 includes gaps G2 between the flavor source 50 and the sheet member 70. Furthermore, as shown in fig. 5(a) and 5(b), the flavor source 50 of this example comprises a plurality of grooves 50c on the outer circumferential surface thereof. The grooves 50c extend in the longitudinal direction of the flavor-generating article 20,and the gaps G2 are formed by the grooves 50c. The outer circumferential surface of a flavor-generating article 20 formed without the grooves 50c is in contact with the sheet member 70. Such an outer circumferential surface may or may not be bonded to the sheet member 70.

As shown in fig. 5, the inner diameter of the packing layer 40b may be formed larger than in the example illustrated in fig. 1 and 2. Specifically, the inner diameter of the packing layer 40b may be larger than the minimum outer diameter of the flavor source 50 (i.e., the outer diameter of the parts where the grooves 50c are formed). This enables air that has passed through the gaps G2 between the flavor source 50 and the sheet member 70 to flow into a hollow channel 40a without being obstructed by the packing layer 40b. In the example shown in fig. 5, a plurality of the grooves 50c are formed on the outer circumferential surface of the flavor source 50, but this is not limiting, and protrusions of any shape may be formed on the outer circumferential surface of the flavor source 50 in order to form the gaps between the flavor source 50 and the sheet member 70, for example. As a result, the projecting parts of the flavor source 50 come into contact with the sheet member 70, gaps are formed between the flavor source 50 and the sheet member 70, and these gaps may form a flow path for the air that has flowed in from the dropping-prevention filter 60.

Fig. 6 is a schematic cross-sectional enlargement of another example of a flavor-generating article 20 having a gap between the flavor source 50 and the sheet member 70. Specifically, fig. 6 depicts fig. 6(a) showing a view in longitudinal section of the flavor-generating article 20, and fig. 6(b) showing a cross section of the flavor-generating article 20 along the arrows B-B shown in fig. 6(a). Unlike the flavor-generating article 20 shown in fig. 5, the flavor-generating article 20 shown in fig. 6 is not surface-processed with the grooves 50c, etc. on the outer surface of the flavor source 50, rather, spacers 52 are provided between the outer surface of the flavor source 50 and the sheet member 70. In the example shown in fig. 6, the spacers 52 are disposed on the upstream side of the flavor source 50 in the longitudinal direction (the position of contact with the dropping-prevention filter 60), but this is not limiting, and the spacers 52 may be at any position in the longitudinal direction provided that they are between the flavor source 50 and the sheet member 70.

The spacers 52 may be formed by an air-permeable material or may be formed by an air-impermeable material. Furthermore, in the example shown in fig. 6, the four spacers 52 are disposed at substantially equal intervals along the outer circumference of the flavor source 50, but this is not limiting, and there may be any number of spacers 52 at any positions in the circumferential direction. Furthermore a spacer 52 may be arranged over the entire circumference of the flavor source 50. That is to say, an annular spacer 52 may be arranged surrounding the flavor source 50. In this case, the spacer 52 is preferably formed by an air-permeable material.

The grooves 50c or the spacers 52 are needed in order to form the gaps G2 in the examples shown in fig. 5 and 6. This is not limiting, and the gaps G2 between the flavor source 50 and the sheet member 70 may also be formed by subjecting the sheet member 70 to processing to increase the surface area thereof (half-cutting, folding, crimping, embossing), etc. to thereby form unevenness on the sheet member 70.

The mouthpiece filter 30 may be a paper filter or an acetate filter, etc., for example. The mouthpiece filter 30 is preferably free from triacetin. Triacetin readily absorbs microwaves, and absorption of microwaves from the microwave generating antenna 122 can therefore be suppressed by making the mouthpiece filter 30 free from triacetin. The relative permittivity of the mouthpiece filter 30 may be 10 or less, and may preferably be 4 or less, for example. This makes it possible to suppress absorption of the microwaves from the microwave generating antenna 122 by the mouthpiece filter 30, enabling the flavor source 50 to be heated efficiently. The mouthpiece filter 30 may comprise, internally or on the surface thereof, at least one selected from the group consisting of charcoal, a metal mesh, and a metal ring. This makes it possible to suppress leakage of microwaves from the microwave generating antenna 122. Specifically, a metal mesh or a metal ring is capable of reflecting microwaves, and charcoal is capable of absorbing microwaves. The opening size of the metal mesh or the inner diameter of the metal ring is preferably no greater than 1/2 of the wavelength (i.e., λ/2) of the electromagnetic waves used. Specifically, if the frequency of the electromagnetic waves used is 2.45 GHz, for example, then the wavelength is approximately 120 mm, so the opening size or inner diameter is preferably 60 mm or less.

The hollow filter 40 is positioned on the mouthpiece side (downstream side) of the flavor source 50. The hollow filter 40 comprises, for example, one or more hollow channels 40a, and the packing layer 40b defining the hollow channel(s) 40a. The packing layer 40b has a high packing density of fibers, so most of the air, flavor or aerosol flows through the hollow channel 40a during inhalation, with virtually none flowing through the packing layer 40b. The flavor or aerosol generated in the flavor source 50 is cooled by passing through the hollow channel(s) 40a and delivered into the user's mouth. Reducing the length of the mouthpiece filter 30 and replacing the mouthpiece filter 30 with a hollow filter 40 are effective for increasing the amount of flavor or aerosol delivered by the flavor-generating article 20 when it is desirable to reduce a decrease in aerosol components due to filtration by the mouthpiece filter 30.

The hollow filter 40 may be formed by paper or acetate, etc., for example. The hollow filter 40 is preferably free from triacetin. Triacetin readily absorbs microwaves, and absorption of microwaves from the microwave generating antenna 122 can therefore be suppressed by making the hollow filter 40 free from triacetin. The relative permittivity of the hollow filter 40 may be 10 or less, and may preferably be 4 or less, for example. This makes it possible to suppress absorption of the microwaves from the microwave generating antenna 122 by the hollow filter 40, enabling the flavor source 50 to be heated efficiently. The hollow filter 40 may comprise, internally or on the surface thereof, at least one selected from the group consisting of charcoal, a metal mesh, and a metal ring. This makes it possible to suppress leakage of microwaves from the microwave generating antenna 122.

The dropping-prevention filter 60 is disposed upstream of the flavor source 50 and keeps the flavor source 50 from dropping out from the flavor-generating article 20. The dropping-prevention filter 60 is disposed upstream of the flavor source 50 and adjacent to the flavor source 50. The dropping-prevention filter 60 may be a paper filter, a molded filter, or an acetate filter, etc., for example. The relative permittivity of the dropping-prevention filter 60 may be 10 or less, and may preferably be 4 or less, for example. This makes it possible to suppress absorption of the microwaves from the microwave generating antenna 122 by the dropping-prevention filter 60, enabling the flavor source 50 to be heated efficiently. The dropping-prevention filter 60 is preferably free from triacetin. Triacetin readily absorbs microwaves, and absorption of microwaves from the microwave generating antenna 122 can therefore be suppressed by making the dropping-prevention filter 60 free from triacetin. The dropping-prevention filter 60 may comprise, internally or on the surface thereof, at least one selected from the group consisting of charcoal, a metal mesh, and a metal ring. This makes it possible to suppress leakage of microwaves from the microwave generating antenna 122.

The dropping-prevention filter 60 shown in fig. 1 and 2 is solid. This enables components of the heated flavor source 50 that have adhered to the surface of the microwave generating antenna 122 to be wiped off by means of the dropping-prevention filter 60 when the microwave generating antenna 122 is withdrawn from the flavor source 50. In this case, the dropping-prevention filter 60 is pierced when the microwave generating antenna 122 is inserted into the first hole 51 in the flavor source 50. This is not limiting, and the dropping-prevention filter 60 may equally be hollow. In other words, the dropping-prevention filter 60 may have a longitudinally-extending through-hole enabling insertion of the microwave generating antenna 122. In this case, resistance to insertion of the microwave generating antenna 122 caused by the dropping-prevention filter 60 is reduced, so the microwave generating antenna 122 can be smoothly inserted into the flavor source 50.

As shown in fig. 2, the dropping-prevention filter 60 may have an air flow hole 61 in communication with the outer circumferential surface thereof. This allows external air to flow into the dropping-prevention filter 60 through the air flow hole 61, which therefore enables the flavor generated by the flavor source 50 to be delivered more efficiently to the user. Furthermore, in this embodiment, the dropping-prevention filter 60 may be surrounded by the sheet member 70, and the dropping-prevention filter 60 may have longitudinally-extending grooves on the outer circumferential surface thereof. In this case, gaps providing communication between the flavor source 50 and the outside of the flavor-generating article 20 are formed between the outer circumferential surface of the dropping-prevention filter 60 and the sheet member 70. This allows external air to flow into the flavor source 50 through the gaps, which therefore enables the flavor generated by the flavor source 50 to be delivered more efficiently to the user.

Embodiments of the present invention were described above, but the present invention is not limited to those embodiments, and various modifications are possible within the scope of the technical concept disclosed in the claims, specification and drawings. Moreover, any shape or material not directly stated in the specification or drawings is also within the scope of the technical concept of the invention of this application provided that it exhibits the action and effect of the invention of this application.

### REFERENCE SIGNS LIST

20: Flavor-generating article
30: Mouthpiece filter
40: Hollow filter
50: Flavor source
50c: Groove
60: Dropping-prevention filter
61: Air flow hole
70: Sheet member
122: Microwave generating antenna
G2: Gap

## Claims

1. A flavor-generating article which is heated by means of microwaves to generate a flavor, the flavor-generating article comprising:
a flavor source; and
a filter having a relative permittivity of 10 or less.

2. The flavor-generating article as claimed in claim 1,
wherein the filter comprises a mouthpiece filter.

3. The flavor-generating article as claimed in claim 1 or 2,
wherein the filter comprises a dropping-prevention filter which is disposed upstream of the flavor source and prevents the flavor source from dropping out from the flavor-generating article.

4. The flavor-generating article as claimed in claim 3,
wherein the dropping-prevention filter has a longitudinally-extending through-hole enabling insertion of a microwave generating antenna.

5. The flavor-generating article as claimed in claim 3 or 4,
comprising a sheet member surrounding the dropping-prevention filter, wherein
the dropping-prevention filter has a longitudinally-extending groove on an outer circumferential surface thereof, and
a gap is formed between the sheet member and the dropping-prevention filter.

6. The flavor-generating article as claimed in any one of claims 3 to 5,
wherein the dropping-prevention filter has an air flow hole in communication with the outer circumferential surface thereof.

7. The flavor-generating article as claimed in any one of claims 1 to 6,
wherein the filter comprises a hollow filter positioned on a mouthpiece side of the flavor source.

8. The flavor-generating article as claimed in any one of claims 1 to 7,
wherein the filter is free from triacetin.

9. The flavor-generating article as claimed in any one of claims 1 to 8,
wherein the filter comprises at least one selected from the group consisting of charcoal, a metal mesh, and a metal ring.

10. The flavor-generating article as claimed in any one of claims 1 to 9,
comprising a sheet member surrounding the outer circumference of the filter and the flavor source.

11. The flavor-generating article as claimed in claim 10,
wherein the sheet member is a metal foil or metal-laminated paper.

12. The flavor-generating article as claimed in any one of claims 1 to 11,
wherein the air flow resistance of the flavor-generating article is 40 mmH₂O-120 mmH₂O.
